# EUROPÄISCHE PATENTANMELDUNG

(11) **EP 4 706 838 A1**
(43) Veröffentlichungstag der Anmeldung: **11.03.2026**
(21) Anmeldenummer: 25189779.9
(22) Anmeldetag: 16.07.2025
(51) Int. Cl.: B08B 5/02, B08B 5/04, B65G 45/22, B08B 15/04

(54) **VORRICHTUNG ZUM REINIGEN ZUMINDEST EINES FÖRDERBANDES UND/ODER VON MITTELS DES FÖRDERBANDES TRANSPORTIERTEN WERKSTÜCKEN**

(30) Priorität: 06.09.2024 DE 202024105112 U
(71) Anmelder: Neuhäuser GmbH, 44532 Lünen (DE)
(72) Erfinder: Neuhäuser, Jürgen, 44532 Lünen (DE)
(74) Vertreter: Andrejewski - Honke Patent- und Rechtsanwälte Partnerschaft mbB

(57) **Zusammenfassung**

Gegenstand der Erfindung ist eine Vorrichtung zum Reinigen zumindest eines Förderbandes und/oder von mittels des Förderbandes (1) transportierten Werkstücken (4), wobei das Förderband (1) umlaufend um eine Haltevorrichtung (2) angetrieben geführt wird, wobei ferner wenigstens eine Unterdruckeinrichtung (7) zur Erzeugung eines Reinigungsluftstromes in einer Reinigungskammer (8) vorgesehen ist, und wobei das Förderband (1) gegebenenfalls mit den darauf oder daran befindlichen Werkstücken (4) durch die Reinigungskammer (8) hindurchläuft, dadurch gekennzeichnet, dass zusätzlich eine das Förderband (1) und/oder das Werkstück (4) beaufschlagende Luftklinge (9) vorgesehen ist, welche Verunreinigungen löst, die ihrerseits mit dem Reinigungsluftstrom abtransportiert werden.

## Beschreibung

Die Erfindung betrifft eine Vorrichtung zum Reinigen zumindest eines Förderbandes und/oder von mittels des Förderbandes transportierten Werkstücken, wobei das Förderband umlaufend um eine Haltevorrichtung angetrieben geführt wird, wobei ferner wenigstens eine Unterdruckeinrichtung zur Erzeugung eines Reinigungsluftstromes in einer Reinigungskammer vorgesehen ist, und wobei das Förderband gegebenenfalls mit den darauf oder daran befindlichen Werkstücken durch die Reinigungskammer hindurchläuft.

Beim Transport von Werkstücken mithilfe von Förderbändern entlang der Haltevorrichtung treten oftmals Verschmutzungen auf. Das gilt sowohl für den Fall, dass die fraglichen Werkstücke mithilfe von in Längsrichtung der Halteeinrichtung angeordneten Magnethalteelementen magnetisch an das Förderband angelegt werden als auch dann, wenn die Anlage der Werkstücke über Unterdruckeinheiten per Unterdruck erfolgt. Die Werkstücke selbst werden dabei aufliegend auf dem Förderband oder hängend am Förderband in der Längsrichtung der Haltevorrichtung transportiert.

In jedem Fall weisen die Werkstücke oftmals Verschmutzungen durch Späne oder Stäube in Verbindung mit Spül- oder Bohrflüssigkeit auf, die sich aufgrund vorangeschalteter Bearbeitungsschritte erklären. Derartige Verschmutzungen oder Verunreinigungen bleiben oftmals am betreffenden Werkstück haften und können zusätzlich auch das Förderband für den Transport der Werkstücke verunreinigen. Derartige Verunreinigungen insbesondere des Förderbandes sind auf die Dauer problematisch, weil hierdurch die erneute Anlage bzw. die Aufnahme und der Transport weiterer Werkstücke erschwert wird. Denn die neu aufgenommenen Werkstücke können hierdurch in ihrer Haftung am Förderband reduziert sein, sodass beispielsweise bei einem hängenden Transport des betreffenden Werkstückes ein unbeabsichtigtes Herabfallen möglich ist. Aus diesem Grund müssen insbesondere die Förderbänder turnusgemäß gereinigt werden.

Für die Reinigung der Förderbänder werden typischerweise in der Praxis Bürsten eingesetzt, mit deren Hilfe die Oberfläche der Förderbänder bearbeitet wird. Solche Bürsten sind jedoch mit dem generellen Nachteil verbunden, dass hierdurch beispielsweise Ölanhaftungen verteilt werden können und somit eine ausreichende Reinigungswirkung nicht stattfindet. Auf dem Förderband befindliche und mit diesem transportierte Werkstücke lassen sich mithilfe solcher Bürsten in der Regel überhaupt nicht reinigen, weil die betreffenden Werkstücke meistens über eine zerklüftete Oberfläche verfügen. Selbst wenn plattenförmige Werkstücke bzw. Gegenstände transportiert werden sollen, stoßen die bisher in der Praxis eingesetzten Bürsten an Grenzen.

Das lässt sich beispielsweise darauf zurückführen, dass heutzutage oftmals filigrane Platten mit definierter Oberflächenstruktur und geringer Materialdicke mithilfe solcher Fördervorrichtungen transportiert werden. Ein Beispiel hierfür stellen sogenannte Bipolarplatten dar, die bei der Herstellung von Brennstoffzellen zum Einsatz kommen. Dabei übernehmen Bipolarplatten die Funktion als Trägerplatte für die zwei Pole der Brennstoffzelle, einerseits die negativ geladene und wasserstoffführende Anodenplatte sowie andererseits die positiv geladene und sauerstoffführende Kathodenplatte. Aus diesem Grund kommt der Bipolarplatte eine mehrfache Funktionalität zu, und zwar der Abfuhr von Wasserdampf sowie der Abgabe von elektrischer und thermischer Energie. D. h., mithilfe der Bipolarplatten wird die Gasversorgung, Kühlung und elektrische Anbindung der Brennstoffzelle realisiert. Dazu verfügen die Platten über Strömungsprofile an ihrer Oberfläche, die bei der Herstellung in der Regel beiderseits in die Platten eingefräst oder eingepresst werden.

Die fraglichen Strömungsprofile und mithin die Bipolarplatten insgesamt sind dementsprechend empfindlich, was eine mechanische Beaufschlagung ihrer Oberfläche angeht. Aus diesem Grund scheiden Bürsten oder generell mechanische Reinigungsmethoden in der Regel aus, um solche Bipolarplatten als transportierte Werkstücke gegebenenfalls zu reinigen. Aber auch Förderbänder verfügen heutzutage oftmals über eine empfindliche Oberfläche, die sich dadurch erklärt, dass an dieser Stelle oftmals mit einer Oberflächenbeschichtung und/oder speziellen Fräsungen gearbeitet wird. Über diese Fräsungen kann beispielsweise eine im Förderband befindliche Saugöffnung zur Beaufschlagung des betreffenden Gegenstandes mit Unterdruck gleichsam zu einer Saugtasche vergrößert werden, die eine an die jeweils geforderten Bedingungen angepasste Größe und Form aufweist.

Zwar gibt es im gattungsbildenden Stand der Technik nach der auf die Anmelderin zurückgehenden EP 4 335 560 A1 bereits Ansätze dahingehend, eine möglichst schonende Reinigung vorzunehmen. Für die Reinigung des Förderbandes alleine sind die beschriebenen Maßnahmen allerdings nur bedingt geeignet. Hier will die Erfindung insgesamt Abhilfe schaffen.

Der Erfindung liegt das technische Problem zugrunde, eine derartige Vorrichtung zum Reinigen zumindest eines Förderbandes und/oder von mittels des Förderbandes transportierten Werkstücken so weiterzuentwickeln, dass eine besonders schonende Reinigungswirkung beobachtet wird.

Zur Lösung dieser technischen Problemstellung schlägt die Erfindung ausgehend von einer gattungsgemäßen Vorrichtung vor, dass zusätzlich eine das Förderband und/oder das Werkstück beaufschlagende Luftklinge vorgesehen ist, welche Verunreinigungen löst, die ihrerseits mit dem Reinigungsluftstrom abtransportiert werden.

Zentrales erfindungsgemäßes Element für die Reinigung ist also eine Luftklinge, englisch "air knife". Eine solche Luftklinge ist in der Lage, besonders wirksam Verunreinigungen von Oberflächen zu lösen. Anschließend sorgt der Reinigungsluftstrom dafür, dass die auf diese Weise gelösten Verunreinigungen abtransportiert werden. Für den Reinigungsluftstrom und seine Erzeugung sorgt die wenigstens eine Unterdruckeinrichtung. Das alles geschieht im Innern der Reinigungskammer, sodass die ungehinderte und unkontrollierte Verteilung von Verunreinigungen hierdurch vermieden wird.

Vielmehr wird der Förderband respektive das mithilfe des Förderbandes transportierte Werkstück im Allgemeinen von der Reinigungskammer größtenteils eingehaust, und zwar temporär, während das Förderband bzw. das Werkstück die Reinigungskammer passiert, sodass mithilfe der Luftklinge gelöste Verunreinigungen zuverlässig über den Reinigungsluftstrom abtransportiert werden. Das alles geschieht besonders schonend und dennoch zugleich wirksam, weil das Förderband respektive das hierauf transportierte Werkstück mechanisch nicht beaufschlagt wird. Vielmehr sorgt für die gewünschte Reinigungswirkung die Luftklinge, also ein von der Luftklinge ausgehender scharfer Luftstrahl, welcher weder das Werkstück noch die möglicherweise empfindliche Oberfläche des Förderbandes bei diesem Vorgang beschädigt.

Dabei versteht es sich, dass der im Regelfall der Luftklinge zugeführten Druckluft im Bedarfsfall Reinigungsflüssigkeit zugeführt werden kann, um eine noch wirksamere Wirkung beim Lösen der Verunreinigungen respektive Verschmutzungen zu erzielen. Solche Luftklingen sind zwar grundsätzlich bekannt, wie der Stand der Technik nach der DE 1 781 437 A belegt, allerdings nicht im beanspruchten Kontext.

Tatsächlich wird die Luftklinge im Allgemeinen mit einer unter Druck stehenden Fluidquelle beaufschlagt. Die Fluidquelle ist dabei im Allgemeinen als Druckluftquelle ausgebildet, arbeitet also mit Druckluft als Fluid. Der Druckluft kann dabei eine Reinigungsflüssigkeit zugemischt sein. Außerdem arbeitet die Druckluftquelle in der Regel mit einem Überdruck von mehr als 5 bar. Vorzugsweise werden sogar mehr als 10 bar Überdruck für die Druckluftquelle eingestellt. Typischerweise kommt eine Druckluftquelle mit 12 bar zum Einsatz.

Die Luftklinge selbst verfügt regelmäßig über einen rechteckförmigen Luftaustrittsspalt, über den die Druckluft aus der Luftklinge in die Reinigungskammer austritt und der gewünschte scharfe sowie gebündelte Strahl gebildet wird. Dazu verfügt der Luftaustrittsspalt typischerweise über eine Spaltbreite von weniger als 100 µm. Im Allgemeinen wird sogar eine Spaltbreite von unter 50 µm eingestellt. Besonders bevorzugt sind Spaltbreiten, die im Bereich von ca. 20 µm für den Luftaustrittsspalt angesiedelt sind.

Darüber hinaus hat es sich bewährt, wenn die Luftklinge zentral in der Reinigungskammer, angeordnet ist. Dadurch können jeweils beidseitig der Luftklinge jeweils Saugkanäle ausgebildet werden. Die Saugkanäle kommunizieren ihrerseits mit der Unterdruckeinrichtung zur Erzeugung des Reinigungsluftstromes.

Um aus dem Reinigungsluftstrom die mithilfe der Luftklinge gelösten Verunreinigungen abzutrennen, ist der Unterdruckeinrichtung im Allgemeinen ein Filter zum Abscheiden der Verunreinigungen vorgeschaltet. Der Filter kann dabei seinerseits austauschbar ausgebildet sein, sodass eine durchgängig einwandfreie Funktionsfähigkeit der Unterdruckeinrichtung gewährleistet ist.

Außerdem hat es sich bewährt, wenn die Reinigungskammer, das Förderband übergreift, und zwar in Querrichtung. Dadurch sorgt die Reinigungskammer in einem bestimmten Bereich dafür, dass das Förderband im Allgemeinen an seiner Oberfläche der gewünschten Reinigungswirkung unterzogen wird. Dazu ist die Reinigungskammer im Allgemeinen gegenüber dem Förderband schwimmend gelagert, kann also etwaige Bewegungen des Förderbandes durch die schwimmende Lagerung ausgleichen.

Für die schwimmende Lagerung greift die Erfindung im Allgemeinen auf quer zur Längsrichtung des Förderbandes orientierte Führungsbolzen zurück. Mithilfe der Führungsbolzen kann sich die Reinigungskammer beispielhaft unter Realisierung der schwimmenden Lagerung an dem demgegenüber durchlaufenen Förderband abstützen. Dazu hat es sich bewährt, wenn die Führungsbolzen über jeweils eine Topflagerung in der Reinigungskammer an ihrem zugehörigen Ende verfügen. Durch die Topflagerung sind in Längsrichtung des jeweiligen Führungsbolzens vorgesehene weitere Lagerungen entbehrlich, weil die jeweiligen Führungsbolzen jeweils nur endseitig in der Topflagerung aufgenommen und hier drehbar gelagert werden.

Die Führungsbolzen sind im Allgemeinen aus einem Kunststoff gefertigt. Hier haben sich Kunststoffe wie beispielsweise PTFE (Polytetrafluorethylen) als besonders günstig erwiesen, weil sie die notwendige Verschleißfestigkeit aufweisen.

Im Ergebnis wird eine Vorrichtung zum Reinigen zumindest eines Förderbandes und/oder von mittels des Förderbandes transportierten Werkstücken beschrieben und zur Verfügung gestellt, die eine besonders wirksame und insbesondere berührungslos Reinigung des Förderbandes sicherstellt. Gleichzeitig oder alternativ können auch die mithilfe des Förderbandes transportierten Werkstücke auf diese Weise einer Reinigung unterzogen werden. Im Allgemeinen wird die Vorrichtung jedoch einzig und allein für die Reinigung des Förderbandes genutzt und eingesetzt. Hierin sind die wesentlichen Vorteile zu sehen.

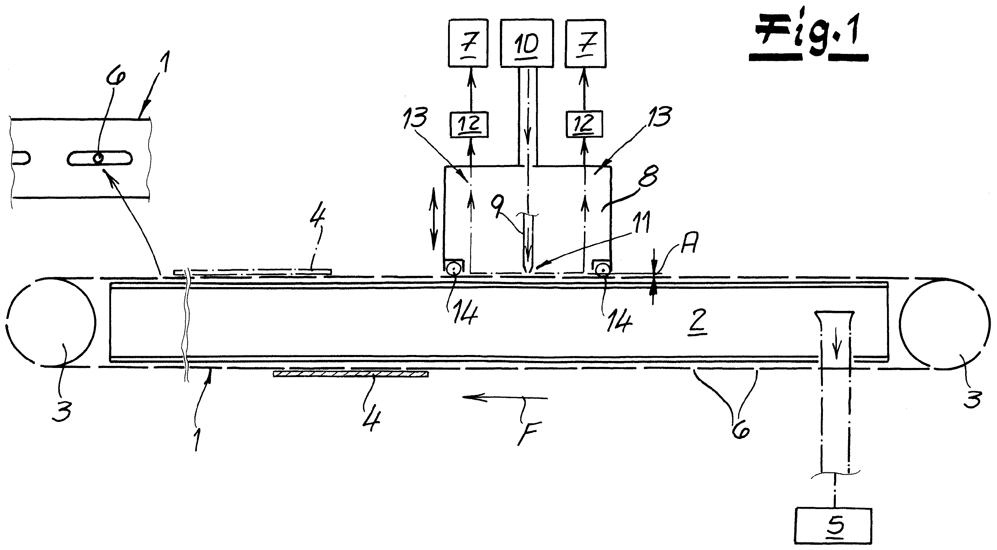

Nachfolgend wird die Erfindung anhand einer lediglich ein Ausführungsbeispiel darstellenden Zeichnung näher erläutert. Die einzige Fig. 1 zeigt eine Vorrichtung zum Reinigen zumindest eines Förderbandes und/oder von mittels des Förderbandes transportierten Werkstücken in einer schematischen Seitenansicht.

In der Figur 1 ist eine Vorrichtung zum Reinigen zumindest eines Förderbandes 1 dargestellt. Das Förderband 1 wird zu diesem Zweck umlaufend um eine Haltevorrichtung 2 angetrieben geführt. Für den Antrieb des Förderbandes 1 sorgen jeweils endseitig der Haltevorrichtung 2 angeordnete Antriebsräder 3, die als Zahnräder ausgebildet sein können. Demzufolge handelte sich bei dem Förderband 1 nicht einschränkend um einen Zahnriemen.

Mithilfe des Förderbandes 1 können in einer in der Fig. 1 in Längsrichtung orientierten Förderrichtung F Werkstücke 4 transportiert werden. Bei den Werkstücken 4 mag es sich um plattenförmige Gegenstände handeln. Zur Anlage der Werkstücke 4 an das Förderband 1 sind im Innern der Haltevorrichtung 2 Magneteinheiten angeordnet, mit deren Hilfe die magnetisierbaren Werkstücke 4 an das umlaufend angetriebene Förderband 1 angezogen und in Anlage hieran transportiert werden. Alternativ oder zusätzlich kann aber auch die Haltevorrichtung 2 im Innern unter Unterdruck gesetzt werden. Dann mag eine Unterdruckeinrichtung 5 wie nach dem Ausführungsbeispiel realisiert sein.

Bei der Unterdruckeinrichtung 5 kann es sich um ein Sauggebläse handeln, mit dessen Hilfe ein Unterdruck im Innern der Haltevorrichtung 2 erzeugt wird. Dieser Unterdruck im Innern der Haltevorrichtung 2 kommuniziert über Unterdruckkanäle mit dem Förderband 1 bzw. Saugöffnungen 6 im Förderband 1, über die das betreffende Werkstück 4 saugend in Anlage am Förderband 1 gehalten und zusammen mit dem Förderband 1 transportiert wird.

Nach dem Ausführungsbeispiel ist neben der Unterdruckeinrichtung 5 bzw. dem Sauggebläse zusätzlich noch eine weitere Unterdruckeinrichtung 7 realisiert, mit deren Hilfe ein in der Fig. 1 durch Pfeile angedeuteter Reinigungsluftstrom in einer Reinigungskammer 8 erzeugt wird. Die an dieser Stelle vorgesehenen jeweiligen Unterdruckeinrichtungen 7 und die Unterdruckeinrichtung 5 können auch zusammengefasst werden. Dabei ist die Auslegung so getroffen, dass die Reinigungskammer 8 oberhalb des Förderbandes 1 angeordnet ist und das Förderband 1 durch die Reinigungskammer 8 an deren Unterkante hindurchgeführt wird. Das kann dann auch für die auf dem Förderband 1 befindlichen Werkstücke 1 im Ausführungsbeispiel und bei dem hier dargestellten aufliegenden Transport geltend.

Im Regelfall ist jedoch die Reinigungskammer 8 im Obertrum des Förderbandes 1 angeordnet, wohingegen die Werkstücke 4 am Untertrum des Förderbandes 1 in der Förderrichtung F geführt und dann beispielsweise abgelegt werden. Dadurch kann das Obertrum des Förderbandes 1 mithilfe des Reinigungsluftstromes von etwaigen Verunreinigungen beispielsweise an seiner Oberfläche befreit werden. Generell lassen sich auch die Werkstücke 4 mithilfe der beschriebenen Vorrichtung reinigen, was allerdings nicht dargestellt ist.

Für die Reinigung greift die Erfindung auf eine zusätzlich das Förderband 1 beaufschlagende Luftklinge 9 zurück. Mithilfe dieser Luftklinge 9 können die beschriebenen Verunreinigungen gelöst werden, und zwar von der Oberfläche des Förderbandes 1 im Ausführungsbeispiel an seinem Obertrum. Die fraglichen Verunreinigungen werden anschließend über den Reinigungsluftstrom abtransportiert. Dazu wird die Luftklinge 9 mit einer unter Druck stehenden Fluidquelle 10 beaufschlagt. Bei der Fluidquelle 10 handelt es sich nach dem Ausführungsbeispiel um eine Druckluftquelle 10, die einen an dieser Stelle vorgesehenen rechteckförmigen Luftaustrittsspalt 11 gegenüberliegend zur Oberfläche des Förderbandes 1 mit einem scharfen Luftstrom beaufschlagt. Tatsächlich sorgt die Druckluftquelle 10 in diesem Zusammenhang für einen Überdruck von mehr als fünf bar und vorzugsweise von mehr als 10 bar. Außerdem ist die Auslegung so getroffen, dass der der Oberfläche des Förderbandes 1 gegenüberliegende Luftaustrittsspalt 11 eine Spaltbreite von weniger als 100 µm aufweist. Meistens werden sogar Spaltbreiten von 50 µm und weniger beobachtet.

In Verbindung mit dem an dieser Stelle meistens eingestellten geringen Abstand A des Luftaustrittspaltes 11 von der Oberfläche des Förderbandes 1 von in der Regel nur wenigen Millimetern oder sogar 1 mm und weniger wird sichergestellt, dass sämtliche auf der Oberfläche des Förderbandes 1 befindlichen Verschmutzungen respektive Verunreinigungen mithilfe der Luftklinge 9 abgelöst werden. Diese Verunreinigungen werden dabei entweder seitlich oder nach oben weggeschleudert und können mit dem sich im Innern der Reinigungskammer 8 ausbildenden Reinigungsluftstrom abtransportiert werden. Hierfür sorgt die Unterdruckeinrichtung 7. Dazu ist der Unterdruckeinrichtung 7 nach dem Ausführungsbeispiel ein Filter 12 vorgeschaltet, der zum Abscheiden der Verunreinigungen dient. Der Filter 12 ist seinerseits austauschbar ausgebildet. Man erkennt im Ausführungsbeispiel, das an dieser Stelle zwei Unterdruckeinrichtungen 7 mit jeweils vorgeschaltetem Filter 12 vorgesehen sind, um die sich jeweils beidseitig der zentralen Luftklinge 9 bildenden Saukanäle 13 jeweils mit dem gewünschten Unterdruck beaufschlagen zu können, damit im zugehörigen Saugkanal 13 der gewünschte Reinigungsluftstrom ausgebildet wird. Selbstverständlich sind auch andere Ausgestaltungen denkbar.

Nach dem Ausführungsbeispiel wird jedoch so vorgegangen, dass die Luftklinge 9 zentral in der Reinigungskammer 8 angeordnet ist und sich die jeweils angesprochenen Saukanäle 13 beidseitig der Luftklinge 9 ausbilden. Die Saukanäle 13 kommunizieren mit der Unterdruckeinrichtung 7 zur Erzeugung des Reinigungsluftstromes.

Man erkennt, dass die Reinigungskammer 8 insgesamt das Förderband 1 übergreift, und zwar unter Berücksichtigung einer gewissen Länge in der Längsrichtung bzw. Förderrichtung F und senkrecht hierzu, d. h. quer zur Längserstreckung des zugehörigen Förderbandes 1. Außerdem ist die Reinigungskammer 8 gegenüber dem Förderband 1 schwimmend gelagert. Dazu können quer zur Längsrichtung des Förderbandes 1 und damit der Förderrichtung F orientierte Führungsbolzen 14 vorgesehen sein. Man erkennt, dass nach dem Ausführungsbeispiel jeweils front- und rückseitig der Reinigungskammer 8 vorgesehene Führungsbolzen 14 an bzw. in der Reinigungskammer 8 gelagert sind. Dazu verfügen die beiden Führungsbolzen 14 jeweils über eine endseitige Topflagerung in der Reinigungskammer 8 an ihren zugehörigen Enden. Die Führungsbolzen 14 sind nach dem Ausführungsbeispiel und nicht einschränkend aus Kunststoff hergestellt.

Auf diese Weise kann die Reinigungskammer, 8 mithilfe der Führungsbolzen 14 an das Förderband 1 angestellt werden. Außerdem sorgen die Führungsbolzen 14 für die gewünschte schwimmende Lagerung der Reinigungskammer 8 gegenüber dem Förderband 1. Dazu können den Führungsbolzen 14 jeweils nicht ausdrücklich dargestellte Federn zugeordnet sein. Auf diese Weise wird die Oberfläche des Förderbandes 1 mit dem scharfen Luftstrom von der Luftklinge 9 beaufschlagt, welcher die Verunreinigungen löst. Die auf diese Weise gelösten Verunreinigungen werden über den Reinigungsluftstrom abgeführt und an dem austauschbaren Filter 12 jeweils abgeschieden.

## Patentansprüche

1. Vorrichtung zum Reinigen zumindest eines Förderbandes (1) und/oder von mittels des Förderbandes (1) transportierten Werkstücken (4), wobei das Förderband (1) umlaufend um eine Haltevorrichtung (2) angetrieben geführt wird, wobei ferner wenigstens eine Unterdruckeinrichtung (7) zur Erzeugung eines Reinigungsluftstromes in einer Reinigungskammer (8) vorgesehen ist, und wobei das Förderband (1) gegebenenfalls mit den darauf oder daran befindlichen Werkstücken (4) durch die Reinigungskammer (8) hindurchläuft,
**dadurch gekennzeichnet, dass**
zusätzlich eine das Förderband (1) und/oder das Werkstück (4) beaufschlagende Luftklinge (9) vorgesehen ist, welche Verunreinigungen löst, die ihrerseits mit dem Reinigungsluftstrom abtransportiert werden.

2. Vorrichtung nach Anspruch 1, **dadurch gekennzeichnet, dass** die Luftklinge (9) mit einer unter Druck stehenden Fluidquelle (10) beaufschlagt wird.

3. Vorrichtung nach Anspruch 2, **dadurch gekennzeichnet, dass** die Fluidquelle (10) als Druckluftquelle (10) ausgebildet ist.

4. Vorrichtung nach Anspruch 3, **dadurch gekennzeichnet, dass** die Druckluftquelle (10) mit einem Überdruck von mehr als 5 bar, vorzugsweise mehr als 10 bar, arbeitet.

5. Vorrichtung nach einem der Ansprüche 1 bis 4, **dadurch gekennzeichnet, dass** die Luftklinge (9) einen regelmäßig rechteckförmigen Luftaustrittsspalt (11) aufweist.

6. Vorrichtung nach Anspruch 5, **dadurch gekennzeichnet, dass** der Luftaustrittspalt (11) eine Spaltbreite von unter 100 µm, vorzugsweise unter 50 µm, besonders bevorzugt eine Spaltbreite von ca. 20 µm, aufweist.

7. Vorrichtung nach einem der Ansprüche 1 bis 6, **dadurch gekennzeichnet, dass** die Luftklinge (9) zentral in der Reinigungskammer (8) angeordnet ist.

8. Vorrichtung nach einem der Ansprüche 1 bis 7, **dadurch gekennzeichnet, dass** beidseitig der Luftklinge (9) jeweils Saugkanäle (13) ausgebildet sind, die mit der Unterdruckeinrichtung (7) zur Erzeugung des Reinigungsluftstromes kommunizieren.

9. Vorrichtung nach einem der Ansprüche 1 bis 8, **dadurch gekennzeichnet, dass** der Unterdruckeinrichtung (7) ein Filter (12) zum Abscheiden der Verunreinigungen vorgeschaltet ist.

10. Vorrichtung nach Anspruch 9, **dadurch gekennzeichnet, dass** der Filter (12) austauschbar ausgebildet ist.

11. Vorrichtung nach einem der Ansprüche 1 bis 10, **dadurch gekennzeichnet, dass** die Reinigungskammer (8) das Förderband (1) in Querrichtung übergreift.

12. Vorrichtung nach einem der Ansprüche 1 bis 11, **dadurch gekennzeichnet, dass** die Reinigungskammer (8) gegenüber dem Förderband (1) schwimmend gelagert ist.

13. Vorrichtung nach Anspruch 12, **dadurch gekennzeichnet, dass** zur schwimmenden Lagerung quer zur Längsrichtung des Förderbandes (1) orientierte Führungsbolzen (14) vorgesehen sind.

14. Vorrichtung nach Anspruch 13, **dadurch gekennzeichnet, dass** die Führungsbolzen (14) jeweils eine Topflagerung in der Reinigungskammer (8) an ihrem zugehörigen Ende aufweisen.

15. Vorrichtung nach Anspruch 13 oder 14, **dadurch gekennzeichnet, dass** der jeweilige Führungsbolzen (14) aus Kunststoff hergestellt ist.

## Geänderte Patentansprüche

### Geänderte Patentansprüche gemäss Regel 137(2) EPÜ.

1. Vorrichtung zum Reinigen zumindest eines Förderbandes (1) und/oder von mittels des Förderbandes (1) transportierten Werkstücken (4), wobei
das Förderband (1) umlaufend um eine Haltevorrichtung (2) angetrieben geführt wird, wobei ferner
wenigstens eine Unterdruckeinrichtung (7) zur Erzeugung eines Reinigungsluftstromes in einer Reinigungskammer (8) vorgesehen ist, wobei weiter
das Förderband (1) gegebenenfalls mit den darauf oder daran befindlichen Werkstücken (4) durch die Reinigungskammer (8) hindurchläuft, und wobei
zusätzlich eine das Förderband (1) und/oder das Werkstück (4) beaufschlagende Luftklinge (9) vorgesehen ist, welche Verunreinigungen löst, die ihrerseits mit dem Reinigungsluftstrom abtransportiert werden,
**dadurch gekennzeichnet, dass**
die Reinigungskammer (8) gegenüber dem Förderband (1) schwimmend gelagert ist.

2. Vorrichtung nach Anspruch 1, **dadurch gekennzeichnet, dass** zur schwimmenden Lagerung quer zur Längsrichtung des Förderbandes (1) orientierte Führungsbolzen (14) vorgesehen sind.

3. Vorrichtung nach Anspruch 2, **dadurch gekennzeichnet, dass** die Führungsbolzen (14) jeweils eine Topflagerung in der Reinigungskammer (8) an ihrem zugehörigen Ende aufweisen.

4. Vorrichtung nach Anspruch 2 oder 3, **dadurch gekennzeichnet, dass** der jeweilige Führungsbolzen (14) aus Kunststoff hergestellt ist.

5. Vorrichtung nach einem der Ansprüche 1 bis 4, **dadurch gekennzeichnet, dass** die Luftklinge (9) mit einer unter Druck stehenden Fluidquelle (10) beaufschlagt wird.

6. Vorrichtung nach einem der Ansprüche 1 bis 5, **dadurch gekennzeichnet, dass** die Druckluftquelle (10) mit einem Überdruck von mehr als 5 bar, vorzugsweise mehr als 10 bar, arbeitet.

7. Vorrichtung nach einem der Ansprüche 1 bis 6, **dadurch gekennzeichnet, dass** die Luftklinge (9) einen regelmäßig rechteckförmigen Luftaustrittsspalt (11) aufweist.

8. Vorrichtung nach Anspruch 7, **dadurch gekennzeichnet, dass** der Luftaustrittspalt (11) eine Spaltbreite von unter 100 µm, vorzugsweise unter 50 µm, besonders bevorzugt eine Spaltbreite von ca. 20 µm, aufweist.

9. Vorrichtung nach einem der Ansprüch1 bis 8, **dadurch gekennzeichnet, dass** die Luftklinge (9) zentral in der Reinigungskammer (8) angeordnet ist.

10. Vorrichtung nach einem der Ansprüche 1 bis 9, **dadurch gekennzeichnet, dass** beidseitig der Luftklinge (9) jeweils Saugkanäle (13) ausgebildet sind, die mit der Unterdruckeinrichtung (7) zur Erzeugung des Reinigungsluftstromes kommunizieren.

11. Vorrichtung nach einem der Ansprüche 1 bis 10, **dadurch gekennzeichnet, dass** der Unterdruckeinrichtung (7) ein Filter (12) zum Abscheiden der Verunreinigungen vorgeschaltet ist.

12. Vorrichtung nach Anspruch 11, **dadurch gekennzeichnet, dass** der Filter (12) austauschbar ausgebildet ist.

13. Vorrichtung nach einem der Ansprüche 1 bis 12, **dadurch gekennzeichnet, dass** die Reinigungskammer (8) das Förderband (1) in Querrichtung übergreift.
